Europäisches Patentamt

European Patent Office

Office européen des brevets

(19)

(11) Publication number: **0 071 277**
**B1**

(12) **EUROPEAN PATENT SPECIFICATION**

(45) Date of publication of patent specification: 27.01.88

(51) Int. Cl.⁴: **H 02 H 9/06**

(21) Application number: 82106915.0

(22) Date of filing: 30.07.82

(54) Surge arrester with a bypass gap.

(30) Priority: 31.07.81 JP 119086/81

(43) Date of publication of application:
09.02.83 Bulletin 83/06

(45) Publication of the grant of the patent:
27.01.88 Bulletin 88/04

(84) Designated Contracting States:
CH DE FR GB IT LI NL SE

(56) References cited:
CH-A- 502 009
US-A-3 091 721
US-A-3 859 568
US-A-4 072 998

"Soviet Invention Illustrated" Week D 08, 1 April
1981 Section X13

(73) Proprietor: Hitachi, Ltd.
5-1, Marunouchi 1-chome
Chiyoda-ku Tokyo 100 (JP)

(72) Inventor: Mizukoshi, Akio
2349-1, Higashiishikawa
Katsuta-shi Ibaraki-ken (JP)
Inventor: Shindo, Katuji
6-21-10, Ayukawa-cho
Hitachi-shi Ibaraki-ken (JP)
Inventor: Akatsu, Yoshi
3188, Muramatsu Tohkai-mura
Naka-gun Ibaraki-ken (JP)
Inventor: Ozawa, Jun
5-2-28, Suehiro-cho
Hitachi-shi Ibaraki-ken (JP)

(74) Representative: Strehl, Peter, Dipl.-Ing. et al
Strehl, Schübel-Hopf, Schulz Patentanwälte
Widenmayerstrasse 17 Postfach 22 03 45
D-8000 München 22 (DE)

EP 0 071 277 B1

## Description

### Background of the invention

The present invention relates to a surge arrester as set forth in the first part of claim 1.

Such a surge arrester is known from SU—A—741367. It has turned out that in this kind of surge arrester there is a possibility of an overvoltage occurring in the bypass gap leading to a restriking of the arc.

### Summary of the invention

The object of this invention is to provide a surge arrester with a bypass gap capable of preventing the restriking of the arc in the bypass gap. This object is met in accordance with claim 1.

### Brief description of the drawings

Fig. 1 is a circuitry electrically equivalent to a surge arrester with a bypass gap;

Fig. 2 is a voltage waveform appearing in the bypass gap of Fig. 1;

Fig. 3 is a circuitry representing a surge arrester with a bypass gap of one embodiment of this invention; and

Figs. 4 and 5 are circuitries of surge arresters with a bypass gap of other embodiments.

### Description of the preferred embodiments

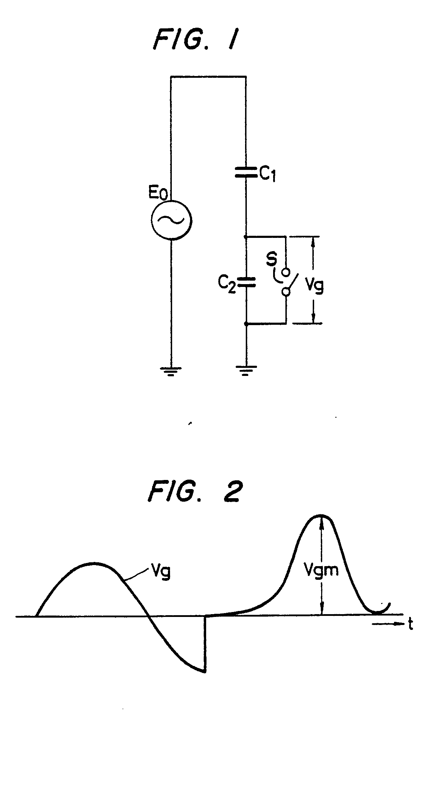

A surge arrester with a bypass gap is represented by its electrically equivalent circuit of Fig. 1. The bypass gap in which a discharge occurred and then the arc ceased is equivalent to a switch that was closed and then opened. The non-linear resistors are represented by capacitors $C_1$ and $C_2$.

With the switch S closed, the voltage across the capacitor $C_1$ is equal to the applied voltage $E_0$ and the voltage across the capacitor $C_2$ is zero. Let $E_0$ be a sinusoidal commercial frequency voltage, then the voltage $V_g$ appearing across the $C_2$ after the switch S is re-opened may be expressed as

$$V_g = E_0 \frac{C_1}{C_1+C_2} \left\{ \frac{1}{\sqrt{\frac{\omega^2}{a^2}+1}} \sin(\omega t + \phi) - \frac{\sin\phi}{\sqrt{\frac{\omega^2}{a^2}+1}} \cdot e^{-at} - \frac{V_c}{E_0}(1-e^{-at}) \right\} \quad (1)$$

$$\phi = \tan^{-1}\left( \frac{a\sin\theta - \omega\cos\theta}{\omega\sin\theta + a\cos\theta} \right)$$

$$a = \frac{1}{R}\left( \frac{1}{C_1} + \frac{1}{C_2} \right)$$

where $V_c$ is the initial voltage of $C_1$, $\theta$ is the phase at which the switch S opens, $\omega$ is the angular frequency of the AC power source and R is the resistance of power source.

The above relationship is shown in Fig. 2.

$V_g$ contains a direct current component and assumes the maximum value during the next halfwave after the switch S was re-opened, the maximum value $V_{gm}$ being twice the voltage that was present before the switch S was closed. With such a high voltage applied there is a possibility of an arc restriking.

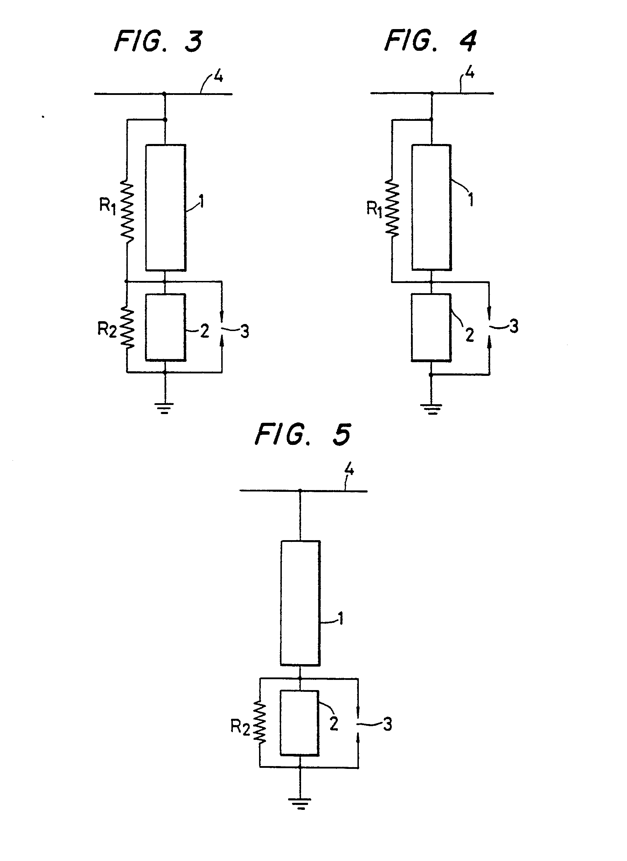

Fig. 3 illustrates a surge arrester with a bypass gap 3 using non-linear resistor elements 1 and 2 composed mainly of zinc oxide. Such resistors have a very large dielectric constant and excellent non-linearity. The non-linear resistor element 2 is connected in parallel with the bypass gap 3. The non-linear resistor elements 1 and 2 are each provided with parallel-connected linear resistors $R_1$ and $R_2$, respectively. The surge arrester constructed as described above is usually installed in a container filled with sulfur hexafluoride ($SF_6$) gas with one terminal connected to the main circuit 4 and the other grounded.

Suppose the equivalent electrostatic capacity of the non-linear resistor elements 1 and 2 is $C_1$ and $C_2$. Then the discharge time constant is given by

$$T = \frac{R_1 \cdot R_2(C_1+C_2)}{(R_1+R_2)} \quad (2)$$

When either $R_1$ or $R_2$ is sufficiently large, for example $R_1$ is infinity, then

$$T = \frac{R_1 \cdot R_2(C_1+C_2)}{(R_1+R_2)} \doteqdot R_2(C_1+C_2) \quad (3)$$

Thus, by selecting the time constant at a value sufficiently smaller than the cycle of the AC voltage, it is possible to extinguish the transient overvoltage before the AC voltage reaches its peak thereby reducing $V_{gm}$ to less than twice the peak value. Let $T_{AC}$ represent the cycle of the AC voltage, it will be seen from the equation (1) that the time at which $V_g$ reaches its maximum is somewhere between $1/4\ T_{AC}$ and $1/2\ T_{AC}$. Thus if the transient voltage term is extinguished within a time shorter than $1/4\ T_{AC}$, then the overshoot of $V_g$ can be suppressed. In practice, if the time constant of the transient voltage term is represented by T and if the relation $3T < 1/4\ T_{AC}$ is maintained, then the effect of the transient voltage term can be suppressed to about 5%.

The linear resistor that prevents the above arc restriking under AC voltage with the main circuit 4 energized has a resistance smaller than the equivalent resistance of the non-linear resistor element connected in parallel with the linear resistor.

In Fig. 3, if the linear resistors $R_1$ and $R_2$ connected in parallel with the non-linear resistor elements 1 and 2 are arranged to maintain the following relationship

$$C_1R_1=C_2R_2<\frac{T_{AC}}{12}$$

then the overshoot of the transient voltage can be held at less than about 5% and a flat voltage dividing characteristic for frequency can be provided.

When $C_1R_1\neq C_2R_2$, the same effect can be obtained by arranging the linear resistors $R_1$ and $R_2$ to meet the relationship

$$C_1R_1 \text{ and } C_2R_2<\frac{T_{AC}}{12}.$$

Fig. 4 illustrates another embodiment of a surge arrester in which members similar to those shown in Fig. 3 carry the same reference numbers. Only the non-linear resistor element 1 is provided with a parallel linear resistor $R_1$. The discharge time constant is $T=R_1(C_1+C_2)$.

Fig. 5 shows still another embodiment of a surge arrester in which only the non-linear resistor element 2 is provided with a parallel linear resistor $R_2$. The discharge time constant of this embodiment is $T=R_2(C_1+C_2)$.

## Claims

1. A surge arrester for diverting overvoltages occurring in the normal operating AC voltage of a circuit (4) comprising
   a first non-linear resistor block (1);
   a second non-linear resistor block (2) connected in series with the first non-linear resistor block (1);
   a bypass gap (3) connected in parallel with the second non-linear resistor block (2); and
   a linear resistor (R1, R2) connected in parallel with at least one of the first and second non-linear resistor blocks (1, 2),
   characterized in
   that the linear resistor (R1, R2) has a resistance smaller than the resistance which the non-linear resistor block (1, 2) connected in parallel with this linear resistor (R1, R2) exhibits when said normal operating AC voltage is applied.

2. The surge arrester of claim 1, characterized in that the first and second non-linear resistor blocks (1, 2) are formed mainly of zinc oxide.

3. The surge arrester of claim 1 or 2, characterized in that the resistance of the linear resistor(s) (R1, R2) is so selected in relation to the capacitances (C1, C2) of the non-linear resistor blocks (1, 2), that

$$C1 \cdot R1 \text{ and } C2 \cdot R2 < T_{AC}/12,$$

wherein $T_{AC}$ is the period of the operating AC voltage.

## Patentansprüche

1. Überspannungsableiter zum Ableiten von in der normalen Betriebs-Wechselspannung einer Schaltung (4) auftretenden Überspannungen, umfassend
   einen ersten nicht-linearen Widerstandsblock (1),
   einen mit dem ersten nicht-linearen Widerstandsblock (1) in Serie geschalteten zweiten nicht-linearen Widerstandsblock (2),
   eine zu dem zweiten nicht-linearen Widerstandsblock (2) parallel geschaltete Nebenschluß-Funkenstrecke (3), und
   einen zu dem ersten und/oder dem zweiten nicht-linearen Widerstandsblock (1, 2) parallel geschalteten linearen Widerstand (R1, R2),
   dadurch gekennzeichnet, daß der linear Widerstand (R1, R2) einen Widerstandswert hat, der kleiner ist als der Widerstandswert, den der zu diesem linearen Widerstand (R1, R2) parallel geschaltete nicht - lineare Widerstandsblocks (1, 2) aufweist, wenn die normale Arbeits-Wechselspannung anliegt.

2. Überspannungsableiter nach Anspruch 1, dadurch gekennzeichnet, daß der erste und der zweite nicht-lineare Widerstandsblock (1, 2) hauptsächlich aus Zinkoxid besteht.

3. Überspannungsableiter nach Anspruch 1 oder 2, dadurch gekennzeichnet, daß der Widerstandswert des beziehungsweise der linearen Widerstände (R1, R2) in Relation zu den Kapazitäten (C1, C2) der nicht-linearen Widerstandsblöcke (1, 2) so gewählt ist, daß

$$C1 \cdot R1 \text{ und } C2 \cdot R2 < T_{AC}/12,$$

wobei $T_{AC}$ die Periode der Arbeits-Wechselspannung ist.

## Revendications

1. Limiteur de surtension servant à dériver des surtensions apparaissant dans la tension alternative normale de fonctionnement d'un circuit (4), comportant
   —un premier bloc formant résistance non linéaire (1);
   —un second bloc formant résistance non linéaire (2) raccordé en série avec le premier bloc formant résistance non linéaire (1):
   —un éclateur de dérivation (3) branché en parallèle avec le second bloc formant résistance non linéaire (2); et
   —une résistance linéaire (R1, R2) branchée en parallèle avec au moins l'un des premier et second blocs formant résistances non linéaires (1, 2),
   caractérisé en ce que
   —la résistance linéaire (R1, R2) possède une valeur résistive inférieure à la valeur résistive que présente le bloc formant résistance non linéaire (1, 2) branché en parallèle avec cette résistance linéaire (R1, R2) lorsque ladite tension alternative normale de fonctionnement est appliquée.

2. Limiteur de surtension selon la revendication 1, caractérisé en ce que les premier et second blocs formant résistances non linéaires (1, 2) sont constitués principalement par le l'oxyde de zinc.

3. Limiteur de surtension selon la revendication 1 ou 2, caractérisé en ce que la valeur résistive de la ou des résistances linéaires (R1, R2) est choisie en rapport avec les capacités (C1, C2) des blocs formant résistances non linéaires (1, 2) de manière que l'on ait:

$$C1 \cdot R1 \ at \ C2 \cdot R2 < T_{AC}/12,$$

$T_{AC}$ étant la période de la tension alternative de fonctionnement.

# FIG. 1

# FIG. 2

## FIG. 3

## FIG. 4

## FIG. 5